(19) Europäisches Patentamt
European Patent Office
Office européen des brevets

(11) Veröffentlichungsnummer : **0 542 687 A1**

(12) **EUROPÄISCHE PATENTANMELDUNG**

(21) Anmeldenummer : **92810860.4**

(22) Anmeldetag : **06.11.92**

(51) Int. Cl.[5] : **A01N 35/10,** // (A01N35/10, 43:82, 43:76, 43:42, 43:40, 25:32)

(30) Priorität : **15.11.91 CH 3326/91**
**09.06.92 CH 1835/92**

(43) Veröffentlichungstag der Anmeldung :
**19.05.93 Patentblatt 93/20**

(84) Benannte Vertragsstaaten :
**AT BE CH DE DK ES FR GB GR IE IT LI LU MC NL PT SE**

(71) Anmelder : **CIBA-GEIGY AG**
**Klybeckstrasse 141**
**CH-4002 Basel (CH)**

(72) Erfinder : **Ryan, Patrick, Dr.**
**7, Foxhollow, Bar Hill**
**Cambridge CB3 8EP (GB)**
Erfinder : **Hofer, Urs, Dr.**
**Salinenstrasse 76**
**CH-4310 Rheinfelden (CH)**
Erfinder : **Istead, Richard**
**Talmattweg 21**
**CH-4103 Bottmingen (CH)**
Erfinder : **Gut, Hans, Dr.**
**Hohle Gasse 181**
**CH-4323 Wallbach (CH)**
Erfinder : **Iwanzik, Wolfgang Paul, Dr.**
**Bodenackerstrasse 7 C**
**CH-4334 Sisseln (CH)**

(54) **Synergistisches Mittel und Verfahren zur selektiven Unkrautbekämpfung.**

(57) Herbizides Mittel, enthaltend 5-(2,4,6-Trimethylphenyl)-2-[1-(ethoximino)-propionyl]cyclohexan-1,3-dion der Formel I

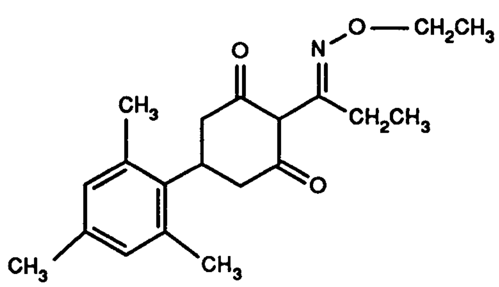

(I)

und eine synergistisch wirksame Menge von entweder 2-[4-(5-Chlor-3-fluorpyridin-2-yloxy)-phenoxy]-propionsäurepropinylester der Formel II

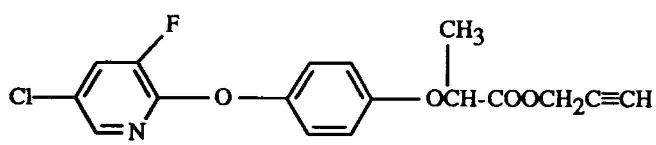

(II)

oder (±)-2-[4-(6-Chlorbenzoxazol-2-yloxy]phenoxy]propionsäureethylester der Formel III

EP 0 542 687 A1

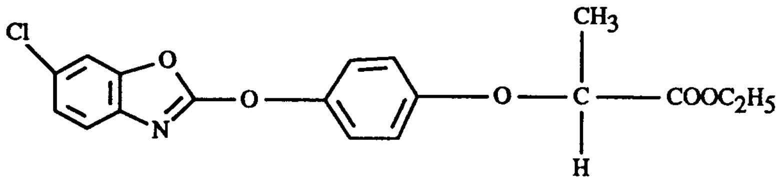 (III).

Die vorliegende Erfindung betrifft ein synergistisches Mittel, welches eine herbizide Wirkstoffkombination enthält, die sich hervorragend zur selektiven Unkrautbekämpfung in Nutzpflanzenkulturen, insbesondere in Kulturen von Getreide, Soya, Baumwolle, Reis, Gemüse und Rasen eignet.

Die Erfindung betrifft auch ein Verfahren zur Bekämpfung von Unkräutern in Nutzpflanzenkulturen, vorzugsweise in Kulturen von Getreide, Soja, Baumwolle, Reis, Gemüse und Rasen, sowie die Verwendung dieses neuen Mittels.

Die Verbindung 5-(2,4,6-Trimethylphenyl)-2-[1-(ethoximino)-propionyl]-cyclohexan-1,3-dion (Tralkoxydim) ist als selektives Herbizid bekannt. Dieser Wirkstoff ist mit seiner Herstellung und Verwendung in den europäischen Patentanmeldungen Nr. 0 128 642 und 0 080 301 beschrieben.

Weitere bekannte Selektivherbizide gegen Unkräuter in Nutzpflanzenkulturen sind 2-[4-(5-Chlor-3-fluorpyridin-2-yloxy)-phenoxy]-propionsäurepropinylester und (±)-2-[4-(6-Chlorbenzoxazol-2-yloxy]phenoxy]propionsäureethylester (Fenoxapropethyl). 2-[4-(5-Chlor-3-fluorpyridin-2-yloxy)-phenoxy]-propionsäurepropinylester ist mit seiner Herstellung und Verwendung in USP 4,713,109 (R-Enantiomer) und USP 4,505,743 (Racemat) beschrieben. Fenoxaprop-ethyl ist aus Pesticide Manual, 8. Edition, Seite 379, British Crop Protection Council, The Lavenham Press Limited, Suffolk, bekannt.

Es hat sich nun überraschenderweise gezeigt, daß eine mengenmäßig variable Kombination der Wirkstoffe eine synergistische Wirkung entfaltet, die die Mehrzahl der in Nutzpflanzenkulturen vorkommenden Unkräuter sowohl im Vorauflauf- als auch im Nachauflaufverfahren zu bekämpfen vermag, ohne die Nutzpflanze zu schädigen.

Es wird daher gemäß der vorliegenden Erfindung ein neues synergistisches Mittel zur selektiven Unkrautbekämpfung vorgeschlagen, das als Wirkstoff 5-(2,4,6-Trimethylphenyl)-2-[1-(ethoximino)-propionyl]-cyclohexan-1,3-dion der Formel I

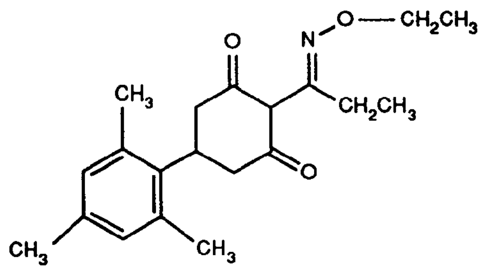

(I)

und eine synergistisch wirksame Menge von entweder 2-[4-(5-Chlor-3-fluorpyridin-2-yloxy)-phenoxy]-propionsäurepropinylester der Formel II

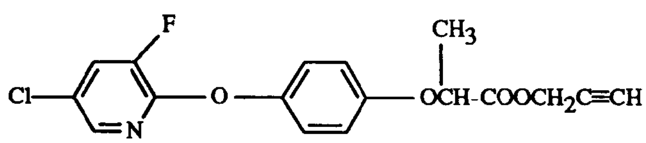

(II)

oder (±)-2-[4-(6-Chlorbenzoxazol-2-yloxy]phenoxy]propionsäureethylester der Formel III

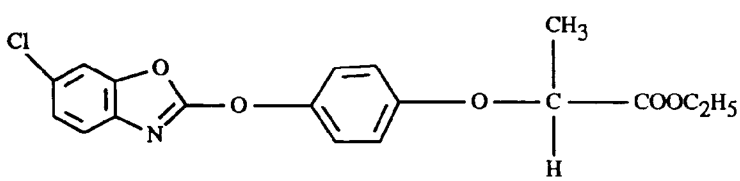

(III)

in Mischung miteinander enthält.

Es ist in hohem Maße überraschend, daß die Kombination des Wirkstoffs der Formel I mit dem Wirkstoff der Formel II oder III nicht nur eine prinzipiell zu erwartende additive Ergänzung des Wirkungsspektrums auf die zu bekämpfenden Unkräuter hervorruft, sondern daß sie einen synergistischen Effekt erzielt, der die Wirkungsgrenzen beider Präparate unter zwei Aspekten erweitert:

Einmal werden die Aufwandmengen der Einzelverbindungen der Formeln I, II und III bei gleichbleibend guter Wirkung gesenkt. Zum anderen erzielt die kombinierte Mischung auch dort noch einen hohen Grad der

Unkrautbekämpfung, wo beide Einzelsubstanzen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf den Nutzpflanzenkulturen zur Folge, wie sie für unbeabsichtigte Wirkstofffüberdosierung notwendig und erwünscht ist.

Die erfindungsgemäße Wirkstoffkombination enthält einen Wirkstoff der Formel I und einen Wirkstoff der Formel II oder III in beliebigem Mischungsverhältnis, in der Regel mit einem Überschuß der einen über die andere Komponente. Bevorzugte Mischungsverhältnisse zwischen dem Wirkstoff der Formel I und dem Mischpartner der Formel II bzw. III liegen zwischen 100 : 1 und 1 : 1, insbesondere zwischen 50 : 1 und 2 : 1.

Als besonders wirksames synergistisches Wirkstoffgemisch hat sich die Kombination des R-Enantiomers der Verbindung der Formel II

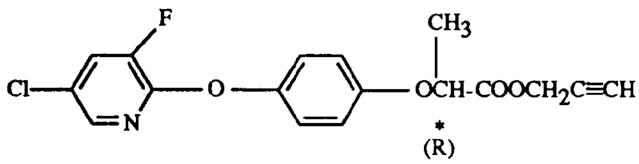

((R)-II)

mit der Verbindung der Formel I erwiesen. Die Verbindung der Formel II, insbesondere die der Formel (R)-II, wird vorzugsweise zusammen mit einem Antidot eingesetzt. Als ganz besonders gut geeignetes Antidot hat sich 1-Methylhexyl-2-(5-chlorchinolin-8-yloxy)acetat der Formel A

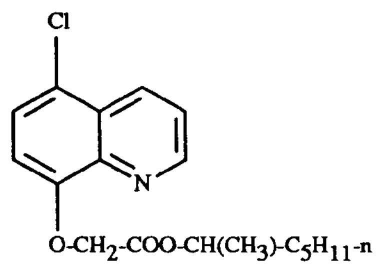

(A)

erwiesen. Dieser Wirkstoff und seine Verwendung ist beispielsweise in EP-A-0 191 736 beschrieben. Das Antidot hat die Aufgabe, die Kulturpflanze vor der phytotoxischen Wirkung der Verbindung der Formel II zu schützen. Das Antidot der Formel A besitzt selbst keine herbizide Wirksamkeit und kann die herbizide Wirkung der Verbindung der Formel II nicht verstärken.

Bei einer Feldbehandlung, welche entweder unter Verwendung einer Tankmischung mit einer Kombination von Antidot der Formel A und Herbizid der Formel II oder durch getrennte Applikation von Antidot der Formel A und Herbizid der Formel II erfolgt, liegt in der Regel ein Verhältnis von Antidot zu Herbizid von 1 : 100 bis 10: 1, bevorzugt 1 : 20 bis 1 : 1, und insbesondere 1 : 1 vor. In einer ganz besonders bevorzugten Kombination von Herbizid der Formel (R)-II und Antidot der Formel A beträgt das Verhältnis von Antidot zu Herbizid 1 : 4.

Der (±)-2-[4-(6-Chlorbenzoxazol-2-yloxy]phenoxy]propionsäureethylester der Formel III

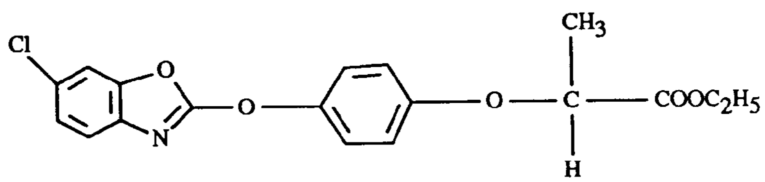

(III),

insbesondere dessen (R)-Enantiomer der Formel (R)-III

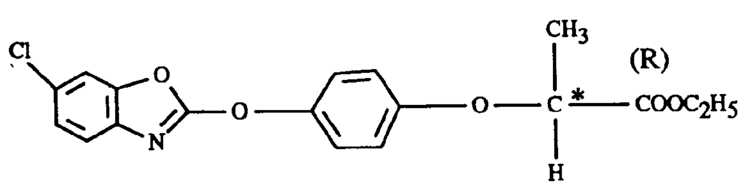

((R)-III),

wird in den erfindungsgemäßen synergistischen Mischungen bevorzugt zusammen mit einem Antidot eingesetzt. Besonders bevorzugt wird die Verbindung der Formel III mit dem Antidot 1-(2,4-Dichlorphenyl)-5-(trichlormethyl)-1H-1,2,4-triazol-3-carbonsäureethylester (Fenchlorazol-ethyl) der Formel B

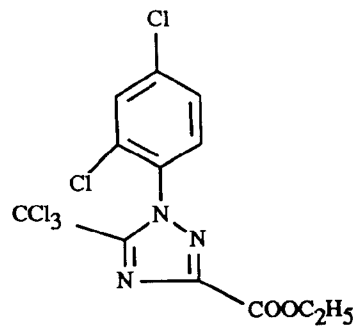

(B)

bekannt aus Pesticide Manual, 9. Edition, Seite 365, British Crop Protection Council, The Lavenham Press Limited, Suffolk. Das Mischungsverhältnis von Antidot der Formel B zu Herbizid der Formel III liegt in der Regel bei 1 : 100 bis 10 : 1, bevorzugt 1 : 20 bis 1 : 1, und insbesondere 1:4 bis 1 : 2 vor. Ganz besonders bevorzugt wird bei den erfindungsgemäßen synergistischen Mischungen das Antidot der Formel B mit dem Herbizid der Formel (R)-III in einem Verhältnis von 1 : 2 eingesetzt. Das Antidot hat die Aufgabe, die Kulturpflanze vor der phytotoxischen Wirkung der Verbindung der Formel III bzw. (R)-III zu schützen. Das Antidot der Formel B besitzt selbst keine herbizide Wirksamkeit und kann die herbizide Wirkung der Verbindung der Formel III bzw. (R)-III nicht verstärken.

Die erfindungsgemäßen herbiziden Wirkstoffkombinationen eignen sich hervorragend zur selektiven Unkrautbekämpfung in Nutzpflanzenkulturen, insbesondere in Kulturen von Getreide, Soja, Baumwolle, Reis und Gemüse. Besonders herausragende Wirksamkeit gegen Unkräuter wurde in Getreidekulturen festgestellt.

Mit den erfindungsgemäßen herbiziden Wirkstoffkombinationen kann eine große Zahl agronomisch wichtiger Unkräuter, wie beispielsweise Avena fatua, Alopecurus myosuroides und Apera spica venti sowohl im Vorauflauf- als auch im Nachauflaufverfahren, vorzugsweise jedoch im Nachauflaufverfahren bekämpft werden. Insbesondere werden durch die erfindungsgemäße Wirkstoffkombination monokotyle Unkräuter bekämpft.

Die Aufwandmenge kann innerhalb weiter Bereiche variieren und hängt von der Beschaffenheit des Bodens, der Art der Anwendung (pre- oder postemergent; Saatbeizung; Anwendung in der Saatfurche; no tillage Anwendung etc.), der Kulturpflanze, dem zu bekämpfenden Unkraut, den jeweils vorherrschenden klimatischen Verhältnissen und anderen durch Anwendungsart, Anwendungszeitpunkt und Zielkultur bestimmten Faktoren ab. Im allgemeinen kann das erfindungsgemäße Wirkstoffgemisch mit einer Aufwandmenge von 1 bis 0,01 [kg Aktivsubstanz/ha], insbesondere 0,5 bis 0,05 [kg Aktivsubstanz/ha] angewendet werden.

Die Gemische der Verbindung der Formel I mit den Verbindungen der Formel II bzw. III werden in unveränderter Form, wie aus der Synthese erhältlich, oder vorzugsweise mit den in der Formulierungstechnik üblichen Hilfsmitteln eingesetzt und werden daher z.B. zu emulgierbaren Konzentraten, direkt versprühbaren oder verdünnbaren Lösungen, verdünnten Emulsionen, Spritzpulvern, löslichen Pulvern, Stäubemitteln, Granulaten, auch zu Verkapselungen in z.B. polymeren Stoffen in bekannter Weise verarbeitet. Die Anwendungsverfahren wie Versprühen, Vernebeln, Verstäuben, Benetzen, Verstreuen oder Gießen werden gleich wie die Art der Mittel den angestrebten Zielen und den gegebenen Verhältnissen entsprechend gewählt.

Die Formulierungen, d.h. die die Wirkstoffe der Formeln I und II bzw. III sowie gegebenenfalls einen oder mehrere feste oder flüssige Zusatzstoffe enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, insbesondere die Fraktionen $C_8$ bis $C_{12}$, wie Mischungen von Alkylbenzolen, z.B. Xylolgemische oder alkylierte Naphthaline; aliphatische und cycloaliphatische Kohlenwasserstoffe wie Paraffine, Cyclohexan oder Tetrahydronaphthalin; Alkohole, wie Ethanol, Propanol oder Butanol; Glykole sowie deren Ether und Ester, wie Propylenglykol oder Dipropylenglykolether, Ketone wie Cyclohexanon, Isophoron oder Diacetonalkohol, starke polare Lösungsmittel wie N-Methyl-2-pyrrolidon, Dimethylsulfoxid oder Wasser; Pflanzenöle sowie deren Ester, wie Raps-, Ricinus- oder Sojaöl; gegebenenfalls auch Silikonöle.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüber hinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali oder gegebenenfalls substituierten Ammoniumsalze von höheren Fettsäuren ($C_{10}$-$C_{22}$), wie z.B. die Na- oder K-Salze der Öl- oder Stearinsäure, oder von natürlichen Fettsäuregemischen genannt, die z.B. aus Kokosnuß- oder Talgöl gewonnen werden können. Ferner sind auch die Fettsäure-methyl-taurinsalze zu erwähnen.

Häufiger werden jedoch sog. synthetische Tenside verwendet, insbesondere Fettalkoholsulfonate, Fettalkoholsulfate, sulfonierte Benzimidazolderivate oder Alkylarylsulfonate.

Die Fettalkoholsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, die Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4- 14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen, enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nicht ionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Die in der Formulierungstechnik gebräuchlichen Tenside sind u.a. in folgenden Publikationen beschrieben:

- "Mc Cutcheon's Detergents and Emulsifiers Annual", Mc Publishing Corp., Glen Rock, New Jersey, 1988.
- M. and J. Ash, "Encyclopedia of Surfactants", Vol. I-III, Chemical Publishing Co., New York, 1980-1981.
- Dr. Helmut Stache "Tensid-Taschenbuch", Carl Hanser Verlag, München/Wien 1981.

Die pestiziden Zubereitungen enthalten in der Regel 0,1 bis 99 %, insbesondere 0,1 bis 95 %, Wirkstoffgemisch der Formel I mit der Formel II bzw. III, 1 bis 99 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren z.B. gegebenenfalls epoxydierte Pflanzenöle (epoxydiertes Kokosnußöl, Rapsöl oder Sojaöl), Entschäumer, z.B. Silikonöl, Konservierungsmittel, Viskositätsregulatoren, Bindemittel, Haftmittel sowie Dünger oder andere Wirkstoffe zur Erzielung spezieller Effekt enthalten.

Insbesondere setzen sich bevorzugte Formulierungen folgendermaßen zusammen : (% = Gewichtsprozent)

| Emulgierbare Konzentrate: | |
|---|---|
| Aktives Wirkstoffgemisch: | 1 bis 90 %, vorzugsweise 5 bis 20 % |
| oberflächenaktives Mittel: | 1 bis 30 %, vorzugsweise 10 bis 20 % |
| flüssiges Trägermittel: | 5 bis 94 %, vorzugsweise 70 bis 85 % |

| Stäube: | |
|---|---|
| Aktives Wirkstoffgemisch: | 0,1 bis 10 % vorzugsweise 0,1 bis 1 % |
| feste Trägermittel: | 99,9 bis 90 %, vorzugsweise 99,9 bis 99% |

| Suspensions-Konzentrate: | |
|---|---|
| Aktives Wirkstoffgemisch: | 5 bis 75 %, vorzugsweise 10 bis 50 % |
| Wasser: | 94 bis 24 %, vorzugsweise 88 bis 30 % |
| oberflächenaktives Mittel: | 1 bis 40 %, vorzugsweise 2 bis 30 % |

| Benetzbare Pulver: | |
|---|---|
| Aktives Wirkstoffgemisch: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 % |

| Granulate: | |
|---|---|
| Aktives Wirkstoffgemisch: | 0,5 bis 30 %, vorzugsweise 3 bis 15 % |
| festes Trägermittel: | 99,5 bis 70 %, vorzugsweise 97 bis 85 % |

## Biologische Beispiele

Ein synergistischer Effekt liegt immer dann vor, wenn die Wirkung der Wirkstoffkombination I und II bzw. III größer ist als die Summe der Wirkung der einzeln applizierten Wirkstoffe.

Die zu erwartende herbizide Wirkung We für eine gegebene Kombination zweier Herbizide kann (vgl. COLBY, S.R., "Calculating synergistic and antagonstic response of herbicide combinations", Weeds 15, Seiten 20-22, (1967)) wie folgt berechnet werden:

$$We = X + \frac{Y \cdot (100 - X)}{100}$$

Dabei bedeuten:

X = Prozent Wachstumshemmung bei Behandlung mit einer Verbindung der Formel I mit p kg Aufwandmenge pro Hektar im Vergleich zur unbehandelten Kontrolle (= 0 %).

Y = Prozent Herbizidwirkung bei Behandlung mit der Verbindung der Formel II bzw. III mit q kg Aufwandmenge pro Hektar im Vergleich zur unbehandelten Kontrolle.

We = Erwartete herbizide Wirkung (Prozent Wachstumshemmung im Vergleich zur unbehandelten Kontrolle)

nach Behandlung mit den Verbindungen der Formeln I und II bzw. III bei einer Aufwandmenge von p + q kg Wirkstoffmenge pro Hektar.

Ist die tatsächlich beobachtete Wirkung größer als der zu erwartende Wert We, so liegt Synergismus vor.

Der synergistische Effekt der Kombinationen des Wirkstoffs der Formel I mit dem Wirkstoffen der Formel II bzw. III wird in den folgenden Beispielen demonstriert:

Beispiel B1: Postemergenter Versuch:

Die Testpflanzensamen werden in Plastiktöpfe, die 0,51 sterilisierte Ackererde enthalten, im Gewächshaus angesät. Nach dem Auflaufen werden die Pflanzen im 2- bis 3-Blattstadium mit einer wäßrigen Dispersion der Wirkstoffkombination besprüht. Die Aufwandmenge an Wirksubstanz wird durch geeignete Verdünnung des Konzentrats eingestellt. Man versprüht jeweils 55 ml Dispersion pro $m^2$. Die Testpflanzen werden im Gewächshaus bei täglicher Bewässerung weiterkultiviert.

Nach 3 Wochen wird die Herbizidwirkung im Vergleich in einer unbehandelten Kontrollgruppe bewertet. Registriert wird die prozentuale Wachstumshemmung im Vergleich zur unbehandelten Kontrolle. Als Maßstab gilt folgende lineare Skala:

100 % = Pflanzen abgestorben
50 % = mittlere Wirkung
0 % = wie unbehandelte Kontrolle

Die Vergleichsergebnisse sind zusammen mit den nach der Colby-Formel berechneten Erwartungswerten in den Tabellen 1 bis 5 eingetragen. Angegeben sind die Formelbezeichnungen der jeweils angewendeten Wirkstoffe und deren Aufwandmengen sowie die geprüften Unkrautpflanzen und Kulturpflanzen.

Tabelle 1: Synergistische Wirkung gegen Avena fatua im Nachauflauf:

| Wirksubstanzen und Aufwandmengen in g AS/ha | Erwartungswert (nach Colby) | gemessene Wachstumshemmung |
|---|---|---|
| 10 g (R)-II* | ---- | 25 |
| 75 g I | ---- | 25 |
| 10 g (R)-II* + 75 g I | 44 | 90 |

* enthält zusätzlich 2,5 g des Antidots 1-Methylhexyl-2-(5-chlorchinolin-8-yloxy)acetat.

Tabelle 2: Synergistische Wirkung gegen Alopecurus myosuroides im Nachauflauf:

| Wirksubstanzen und Aufwandmengen in g AS/ha | Erwartungswert (nach Colby) | gemessene Wachstumshemmung |
| --- | --- | --- |
| 10 g (R)-II* | ---- | 0 |
| 75 g I | ---- | 0 |
| 10 g (R)-II* + 75 g I | 0 | 99 |

* enthält zusätzlich 2,5 g des Antidots 1-Methylhexyl-2-(5-chlorchinolin-8-yloxy)acetat.

Tabelle 3: Synergistische Wirkung gegen Apera spica venti im Nachauflauf:

| Wirksubstanzen und Aufwandmengen in g AS/ha | Erwartungswert (nach Colby) | gemessene Wachstumshemmung |
| --- | --- | --- |
| 10 g (R)-II* | ---- | 0 |
| 75 g I | ---- | 0 |
| 10 g (R)-II* + 75 g I | 0 | 90 |

* enthält zusätzlich 2,5 g des Antidots 1-Methylhexyl-2-(5-chlorchinolin-8-yloxy)acetat.

Tabelle 4: Wirkung des erfindungsgemäßen Wirkstoffgemisches gegen die Kulturpflanze Wintergerste im Nachauflauf:

| Wirksubstanzen und Aufwandmengen in g AS/ha | Erwartungswert (nach Colby) | gemessene Wachstumshemmung |
|---|---|---|
| 10 g (R)-II* | ---- | 0 |
| 75 g I | ---- | 0 |
| 10 g (R)-II* + 75 g I | 0 | 0 |

* enthält zusätzlich 2,5 g des Antidots 1-Methylhexyl-2-(5-chlorchinolin-8-yloxy)acetat.

Tabelle 5: Synergistische Wirkung gegen Apera spica venti im Nachauflauf:

| Wirksubstanzen und Aufwandmengen in g AS/ha | Erwartungswert (nach Colby) | gemessene Wachstumshemmung |
|---|---|---|
| 20 g (R)-III* | ---- | 50 |
| 75 g I | ---- | 20 |
| 20 g (R)-III* + 75 g I | 60 | 95 |

* enthält zusätzlich 10 g des Antidots 1-(2,4-Dichlorphenyl)-5-(trichlormethyl)-1H-1,2,4-triazol-3-carbonsäureethylester.

F1. Formulierungsbeispiele

Mischungen der Verbindungen der Formeln I und II bzw I und III (% = Gewichtsprozent)

| a) Spritzpulver | a) | b) | c) | d) |
|---|---|---|---|---|
| Mischung Wirkstoff der Formel I mit Wirkstoff der Formel II | 10% | 20% | 5 % | 30% |
| Na-Ligninsulfonat | 5 % | 5 % | 5 % | 5 % |
| Na-Laurylsulfate | 3 % | - | 3 % | - |
| Na-Diisobutylnaphthalinsulfonat | - | 6 % | - | 6 % |
| Octylphenolpolyethylenglykolether (7-8 Mol EO) | - | 2 % | - | 2 % |
| Hochdisperse Kieselsäure | 5 % | 27 % | 5 % | 27 % |
| Kaolin | 67 % | - | 67 % | - |

Der Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | a) | b) | c) |
|---|---|---|---|
| Mischung Wirkstoff der Formel I mit Wirkstoff der Formel III | 5 % | 5 % | 12 % |
| Octylphenolpolyethylenglykolether (4-5 Mol EO) | 3 % | 3 % | 3 % |
| Ca-Dodecylbenzolsulfonat | 3 % | 3 % | 2 % |
| Ricinusölpolyglykolether (36 Mol EO) | 4 % | 4 % | 4 % |
| Cyclohexanon | 30 % | 30 % | 31 % |
| Xylolgemisch | 50 % | 35 % | 35 % |

Aus diesen Konzentraten können durch Verdünnen mit Wasser Emulsionen jeder gewünschten Konzentration hergestellt werden.

| c) Stäubemittel | a) | b) | c) | d) |
|---|---|---|---|---|
| Mischung Wirkstoff der Formel I mit Wirkstoff der Formel II | 2 % | 4 % | 2 % | 4 % |
| Talkum | 3 % | 4 % | 4 % | 8 % |
| Kaolin | 95 % | 92 % | 94 % | 88 % |

Man erhält anwendungsfertige Stäubemittel, indem das Wirkstoffgemisch mit dem Träger vermischt und auf einer geeigneten Mühle vermahlen wird.

| d) Extruder Granulat | a) | b) | c) |
|---|---|---|---|
| Mischung Wirkstoff der Formel I mit Wirkstoff der Formel II | 5 % | 3 % | 5 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet Dieses Gemisch wird extrudiert und anschließend im Luftstrom getrocknet.

| e) Umhüllungs-Granulat | a) | b) |
|---|---|---|
| Mischung Wirkstoff der Formel I mit Wirkstoff der Formel III | 1,5 % | 3 % |
| Polyethylenglykol (MG 200) | 3 % | 3 % |
| Kaolin | 94 % | 89 % |

Das fein gemahlene Wirkstoffgemisch wird in einem Mischer auf das mit Polyethylenglykol angefeuchtete Kaolin gleichmäßig aufgetragen. Auf diese Weise erhält man staubfreie Umhüllungs-Granulate.

| f) Suspensions-Konzentrat | a) | b) |
|---|---|---|
| Mischung Wirkstoff der Formel I mit Wirkstoff der Formel II | 20 % | 20 % |
| Ethylenglykol | 10 % | 10 % |
| Nonylphenolpolyethylenglykolether (15 Mol EO) | 6 % | 6 % |
| Na-Ligninsulfonat | 10 % | 10 % |
| Carboxymethylcellulose | 1 % | 1 % |
| 37 %ige wäßrige Formaldehyd-Lösung | 0,2 % | 0,2 % |
| Silikonöl in Form einer 75%igen wäßrigen Emulsion | 0,8 % | 0,8 % |
| Wasser | 32 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Es ist oft zweckmäßiger, den Wirkstoff der Formel I und den Mischpartner der Formel II bzw. III einzeln zu formulieren und sie dann erst kurz vor dem Ausbringen im Applikator im gewünschten Mischungsverhältnis als "Tankmischung" im Wasser zusammenzubringen. In den Formulierungsbeispielen können die Verbindungen der Formeln II bzw. III gewünschtenfalls mit den Antidots A bzw. B in den oben angegebenen Mischungsverhältnissen eingesetzt werden.

## Patentansprüche

1. Herbizides Mittel, enthaltend 5-(2,4,6-Trimethylphenyl)-2-[1-(ethoximino)-propionyl]-cyclohexan- 1,3-dion der Formel I

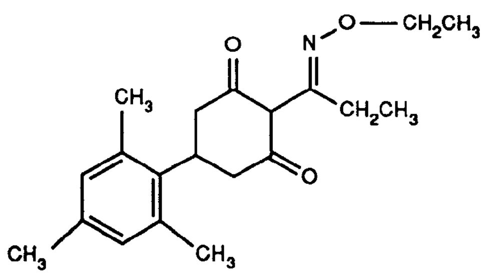

(I)

und eine synergistisch wirksame Menge von entweder 2-[4-(5-Chlor-3-fluorpyridin-2-yloxy)-phenoxy]-propionsäurepropinylester der Formel II

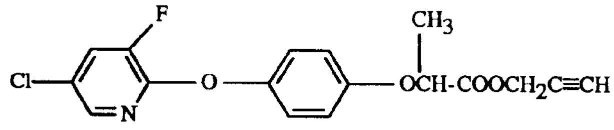

(II)

oder (±)-2-[4-(6-Chlorbenzoxazol-2-yloxy]phenoxy]propionsäureethylester der Formel III

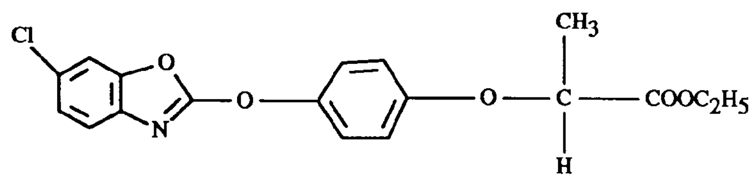

(III).

2. Mittel nach Anspruch 1, enthaltend 5-(2,4,6-Trimethylphenyl)-2-[1-(ethoximino)-propionyl]-cyclohexan-1,3-dion der Formel I

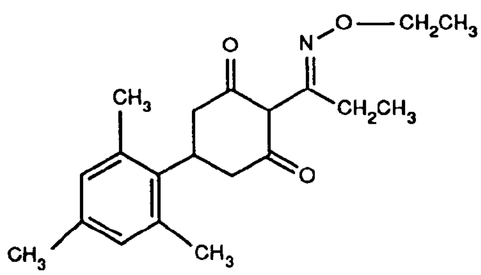

(I)

und eine synergistisch wirksame Menge von 2-[4-(5-Chlor-3-fluorpyridin-2-yloxy)-phenoxy]-propionsäurepropinylester der Formel II

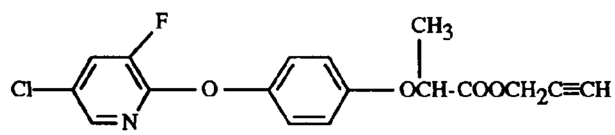

(II).

3. Mittel nach Anspruch 1, enthaltend 5-(2,4,6-Trimethylphenyl)-2-[1-(ethoximino)-propionyl]-cyclohexan-1,3-dion der Formel I

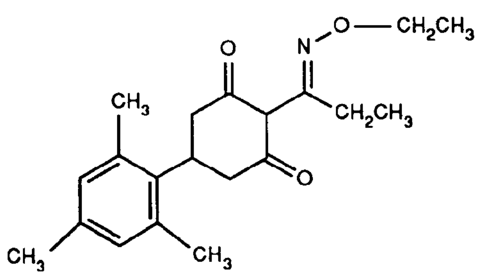

(I)

und eine synergistisch wirksame Menge von (±)-2-[4-(6-Chlorbenzoxazol-2-yloxy]phenoxy]propionsäureethylester der Formel III

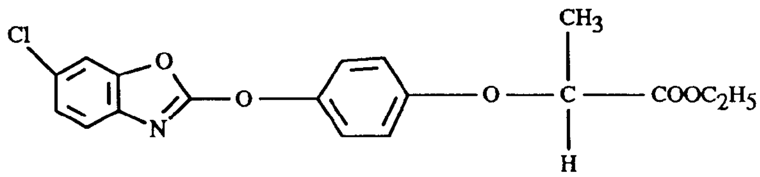 (III).

4. Mittel gemäß Anspruch 2, dadurch gekennzeichet, daß die Verbindung der Formel II in Form des (R)-Enantiomers vorliegt.

5. Mittel gemäß Anspruch 3, dadurch gekennzeichet, daß die Verbindung der Formel III in Form des (R)-Enantiomers vorliegt.

6. Mittel gemäß Anspruch 2, dadurch gekennzeichnet, daß die Verbindung der Formel II als Antidote 1-Methylhexyl-2-(5-chlorchinolin-8-yloxy)acetat enthält.

7. Mittel gemäß Anspruch 3, dadurch gekennzeichnet, daß die Verbindung der Formel III als Antidote 1-(2,4-Dichlorphenyl)-5-(trichlormethyl)-1H-1,2,4-triazol-3-carbonsäureethylester enthält.

8. Mittel gemäß Anspruch 1, dadurch gekennzeichnet, daß in dem genannten Mittel die Komponente der Formel I gegenüber der Komponente der Formel II oder III in einem Gewichtsverhältnis von 100 : 1 bis 1 : 1 vorhanden ist.

9. Verfahren zur Bekämpfung unerwünschten Pflanzenwuchses in Nutzpflanzenkulturen, dadurch gekennzeichnet, daß man eine herbizid wirksame Menge eines Mittels gemäß Anspruch 1 auf die Kulturpflanze oder deren Lebensraum einwirken läßt.

10. Verfahren gemäß Anspruch 9 zur Bekämpfung von Unkräutern in Kulturen von Getreide, Soja Baumwolle, Reis, Gemüse und Rasen.

11. Verfahren gemäß Anspruch 10 zur Bekämpfung von Unkräutern in Getreide.

12. Verfahren gemäß Anspruch 9 zur Bekämpfung von monokotyledonen Unkräutern.

13. Verfahren gemäß Anspruch 9, dadurch gekennzeichnet, daß man die Nutzpflanzenkulturen mit dem genannten Mittel in Aufwandmengen behandelt, die 1 bis 0,01 kg Wirkstoffgesamtmenge pro Hektar entsprechen.

Europäisches Patentamt

# EUROPÄISCHER RECHERCHENBERICHT

Nummer der Anmeldung
EP 92 81 0860

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | AU-B-587 549 (ICI AUSTRALIA LTD.)<br>* Seite 1 - Seite 4, Zeile 16 *<br>* Seite 7, Zeile 25 - Seite 8, Zeile 3 *<br>* Seiten 9-10, Tabelle *<br>--- | 1-13 | A01N35/10<br>//(A01N35/10, 43:82, 43:76, 43:42, 43:40, 25:32) |
| Y | BRIGHTON CROP PROTECTION CONFERENCE--WEEDS<br>Nr. 2, 1989, THORNTON HEATH, GB;<br>Seiten 729 - 734<br>D. CORNES ET AL. 'The Efficacy and Crop Safety of a Herbicide + Safener Combination in Cereals under UK Conditions'<br>* Zusammenfassung; Tabellen *<br>--- | 1,2,4,6, 8-13 | |
| Y | EP-A-0 400 585 (HOECHST AG)<br>* Seite 1, Zeile 1-9 *<br>* Seite 1, Zeile 44 - Zeile 47 *<br>* Seite 3, Zeile 34 - Zeile 38 *<br>* Seiten 5 und 6, Tabellen, Formulierungen 2, 12-16 *<br>--- | 3,5,7 | |
| | | | RECHERCHIERTE SACHGEBIETE (Int. Cl.5) |
| A | EP-A-0 248 968 (CIBA-GEIGY AG)<br>* Seite 1 - Seite 2, Absatz 2 *<br>* Seite 10, Absatz 1; Beispiel 5 *<br>* Ansprüche 1-3; Abbildung 1 *<br>--- | 1-13 | A01N |
| A | WEED TECHNOLOGY<br>Bd. 5, Nr. 2, 1991, CHAMPAIGN, IL., US;<br>Seiten 310 - 316<br>K.N.HARKER ET AL.: 'Synergistic Mixtures of Sethoxydim and Fluazifop on Annual Grass Weeds'<br>* Seite 310, Zusammenfassung und Einleitung *<br>--- | 1-13 | |
| A | US-A-4 874 421 (W.A.KLESCHICK)<br>* Spalte 1 - Spalte 2, Zeile 31 *<br>----- | 1-13 | |

Der vorliegende Recherchenbericht wurde für alle Patentansprüche erstellt

| Recherchenort | Abschlußdatum der Recherche | Prüfer |
|---|---|---|
| DEN HAAG | 25 FEBRUAR 1993 | MUELLNERS W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)